# EUROPÄISCHE PATENTSCHRIFT

(11) **EP 1 144 964 B1**
(45) Veröffentlichungstag und Bekanntmachung des Hinweises auf die Patenterteilung: **25.05.2005**
(21) Anmeldenummer: 99958423.8
(22) Anmeldetag: 13.12.1999
(51) Int. Cl.: G01G 21/28

(54) **WAAGE MIT EINEM SCHWENKBAREN BEDIENUNGSPULT**
BALANCE WITH A SWIVELLING OPERATING CONSOLE
BALANCE A PUPITRE DE COMMANDE PIVOTANT

(30) Priorität: 18.12.1998 DE 19858625
(43) Veröffentlichungstag der Anmeldung: 17.10.2001
(73) Patentinhaber: Mettler-Toledo GmbH, 8606 Greifensee (CH)
(72) Erfinder: LÜCHINGER, Paul, CH-8610 Uster (CH); MEISTER, Beat, CH-8606 Greifensee (CH); SCHILLIG, Alfred, CH-8627 Grüningen (CH)
(86) Internationale Anmeldenummer: PCT/IB1999/001985
(87) Internationale Veröffentlichungsnummer: WO 2000/037902

(56) Entgegenhaltungen:
- EP-A- 0 556 473
- DE-A- 3 939 959
- DE-C- 4 233 395

## Beschreibung

Die Erfindung bezieht sich auf eine Waage nach dem Oberbegriff des Anspruches 1. Eine solche Waage ist beispielsweise aus der DE-A-39 39 959 bekannt.

Bedienungspulte an Waagen der genannten Art werden in zunehmendem Masse zur Steuerung aller möglichen Eingaben verwendet, wobei die modernsten Eingabemittel zum Einsatz kommen. Dies führt dazu, dass, sofern elektronische Eingabemittel zur Anwendung gelangen, die von solchen Bedienungspulten ausgehende Wärmeentwicklung störend die Wägeergebnisse beeinflussen kann, insbesondere wenn es sich um Analysen - oder Mikrowaagen handelt. Es versteht sich aber, dass die Erfindung sich auf alle möglichen Eingabemittel bezieht.

Anderseits muss man sich bewusst sein, dass solche Waagen oft in Laboratorien eingesetzt werden, in denen das Gewicht chemischer Substanzen bestimmt werden soll. In solcher Umgebung ist die Reinhaltung eine wichtige Anforderung. Mit fest angebrachten Bedienungspulten nach dem Stand der Technik, wie er etwa in der EP-A-0 556 473 zum Ausdruck kommt, ist es aber nötig, zum Säubern der darunter liegenden Fläche die ganze Waage abzuheben, selbst wenn sich die zu entfernende Substanz nur unter dem Bedienungspult angesammelt hat. Entfernt man aber die Waage, so wird nachträglich in vielen Fällen ein neuerlicher Nivelliervorgang notwendig sein, was zeitraubend und arbeitsaufwendig ist.

Eine diesbezügliche Verbesserung zeigt die eingangs erwähnte DE-A-39 39 959. Das Bedienungspult ist hier um mindestens eine vertikale Achse um den Windschutz herum schwenkbar, im übrigen aber starr am Gehäuse befestigt. Dabei ist nach der Darstellung offenbar daran gedacht, dass sich das Pult, das mit der eigentlichen Waage eine stabile Einheit bildet, mit seiner Vorderkante an einer Unterlage abstützt. Dies ist aber beim Nivellieren der Waage nicht gewährleistet. Ist das Niveau des Waagengehäuses höher, so bildet sich unter der Vorderkante des Bedienungspultes ein spalt bzw. Zwischenraum, der einer festen Abstützung des Pultes entgegensteht. Dies ist insbesondere dann unangenehm, wenn das Bedienungspult mindestens eine Taste aufweist, die durch Druck in einer Richtung rechtwinklig zur oberen Pultoberfläche zu betätigen ist. Der Druck bzw. die Betätigung der mindestens einen Taste verursacht dann nämlich ein Kippmoment, das gegebenenfalls wiederum die Genauigkeit des Messergebnisses zu beeinflussen vermag, auf jeden Fall aber eine gewisse Instabilität auf das Waagengehäuse überträgt.

Aus dem Obigen ist also ersichtlich, dass es eine ganze Reihe von Nachteilen gibt, die mit Waagen nach dem Stande der Technik verbunden sein können.

Daher liegt eine Aufgabe der vorliegenden Erfindung darin, eine Konstruktion zu finden, die wenigstens einen Teil, vorzugsweise aber alle diese Mängel beseitigt, die einer Verbesserung der Genauigkeit und einer besseren Handhabbarkeit einer Waage entgegenstehen.

Die Lösung dieser Aufgabe und die Beseitigung all dieser sehr unterschiedlichen Mängel gelingt in überraschend einfacher weise durch die Merkmale des Anspruches 1.

Nicht nur, dass die oben genannten Mängel beseitigt werden, es ergibt sich darüber hinaus auch noch der zusätzliche Vorteil einer leichteren Transportierbarkeit der erfindungsgemässen Waage, da sie in der Ruhelage des Bedienungspultes weniger sperrig ist. Ferner beansprucht die Waage beim Abstellen weniger Platz.

Wenn dabei im Rahmen dieser Beschreibung von einer "Schwenkgelenkseinrichtung" die Rede ist, so deshalb, weil die Erfindung nicht darauf beschränkt ist, dass das Bedienungspult nur um eine einzige geometrische Achse drehbar schwenkt, sondern auch die Achse selbst gekippt und verschwenkt werden kann.

Die Erfindung wird vorteilhaft so verwirklicht, dass die Schwenkgelenkseinrichtung eine, insbesondere stummelförmige, Achse an einem der gegeneinander beweglichen Teile mit einem gegenüber der Achse ein Spiel zulassenden Lagerauge am anderen der gegeneinander beweglichen Teile aufweist. Dies bringt einerseits mit sich, dass durch das spiel ein Wärmeübergang vom Bedienungspult auf das Waagengehäuse wirksam unterbunden wird. Dies bedeutet aber auch, dass sich das Spiel gegebenenfalls auch in etwa horizontaler Richtung und/oder auch vertikal erstrecken kann. Bevorzugt ist es jedoch, wenn das Spiel mindestens in vertikaler Richtung gegeben ist, weil so das Bedienungspult mechanisch vom Waagengehäuse derart entkoppelt wird, dass die Nivellierung der Waage, d.h. ihre Höhenverstellung, ohne gleichzeitige Höhenverstellung des Bedienungspultes leichter möglich ist. Durch die vertikale Schwenkbarkeit der Schwenkgelenkseinrichtung passt sich das Bedienungspult der möglicherweise vorhandenen Neigung der Unterlage, beispielsweise Tischoberfläche an.

Wenn das Lagerauge etwa U-förmig ausgebildet ist und so eine Trennung von der Achse über die offene Seite der U-Form ermöglicht wird, so wird damit das Ersetzen des Bedienungspultes, etwa eines einer anderen Art mit dem Waagengehäuse zu verbinden oder zu Reparatur- und Wartungszwecken, erleichtert. Auf diese Weise kann sogar gewünschtenfalls das Bedienungspult von der Waage beim Abstellen entfernt werden.

Gerade in Laboratorien, wo gegebenenfalls chemische Substanzen verschüttet werden können, ist es wichtig, eine im allgemeinen vorgesehene elektrische Verbindung des Bedienungspultes - trotz seiner gegenüber dem Waagengehäuse schwenkbaren mechanischen Verbindung - vor dem Zutritt solcher, auf ein Verbindungskabel allenfalls zerstörend wirkenden chemischen Substanzen zu schützen. Dies gelingt vorteilhaft so, dass mindestens ein das Waagengehäuse mit dem Bedienungspult verbindendes Kabel vorgesehen ist, das im Bereiche der Schwenkgelenkseinrichtung aus dem Waagengehäuse austritt, weil so die Verbindung relativ kurz gehalten werden kann, so dass sie nicht auf der Unterlage der waage liegen muss.

Vorzugsweise ist das Kabel wenigstens annähernd, vorzugsweise am Waagengehäuse, koaxial zur Achse und durch diese hindurch geführt, so dass auf das Kabel möglichst wenig oder gar keine Biegekräfte wirken.

Eine weitere Massnahme, die das Ersetzen bzw. Abnehmen eines Bedienungspultes vom Waagengehäuse erleichtert ist dadurch gekennzeichnet, dass das Kabel aus einem vom Waagengehäuse abnehmbaren und mit diesem über eine lösbare Befestigungseinrichtung verbundenen, insbesondere plattenförmigen, Abschluss austritt.

Weitere Einzelheiten der Erfindung ergeben sich aus der nachfolgenden Beschreibung eines in der Zeichnung schematisch dargestellten, besonders bevorzugten Ausführungsbeispieles. Es zeigen:
- Fig. 1: eine Perspektivansicht einer erfindungsgemässen Waage;
- Fig. 2: eine Frontansicht eines Details des Waagengehäuses in Richtung des Pfeils I in der Fig. 1 und
- Fig. 3: eine Seitenansicht des Bedienungspults mit einem teilweisen Schnitt nach der Linie III-III in der Fig. 2.

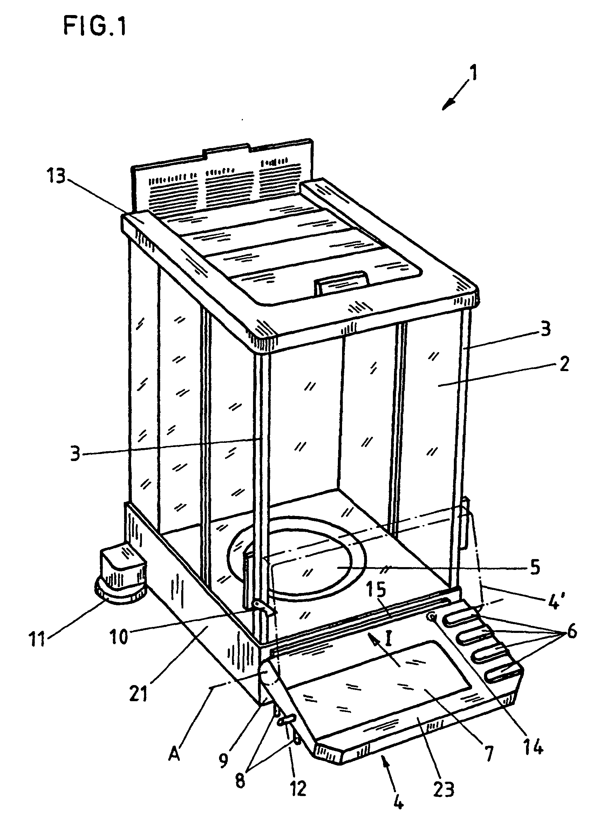

Eine Waage 1 mit einer Waagschale 5 besitzt einen Windschutz 2, der auf einem Waagengehäuse 21 ruht. Der Windschutz 2 besitzt einen Rahmen 13, der an seiner Oberseite die aus Fig. 1 ersichtliche, etwa U-förmige Gestalt hat und nach unten zu durch vertikale Ständer 3 abgestützt ist. Der Windschutz 2 hat im übrigen einen Aufbau, wie er in der schon genannten EP-A-0 556 473 im einzelnen beschrieben ist, deren Inhalt hier durch Bezugnahme als offenbart gelten soll.

Das den Windschutz 2 tragende Waagengehäuse 21 besitzt an der Rückseite wenigstens einen höhenverstellbaren Nivellierfuss 11 und ist an einer Frontplatte 9 mit einem Bedienungspult 4 verbunden. Dieses Bedienungspult 4 ist erfindungsgemäss wenigstens annähernd um eine geometrische Schwenkachse A schwenkbar an der Frontplatte 9 angebracht. Daher ist es möglich, das Bedienungspult 4 aus der in Fig. 1 mit vollen Linien dargestellten Arbeitslage, in der es betriebsbereit ist, in eine hochgeklappte, strich-punktiert dargestellte Ruhelage 4' zu verschwenken, so dass sich die nach vorne auskragende Längsseite des Bedienungspultes 4 nach oben erstreckt. Dies hat mehrere Vorteile:
- soll die Waage an einen anderen Ort gebracht werden, kann man sie leichter tragen;
- an einem etwaigen Abstellplatz nimmt die Waage weniger Raum ein;
- vor allem aber ist nach dem Hochklappen, die darunter befindliche jeweilige Unterlage leichter zu reinigen.

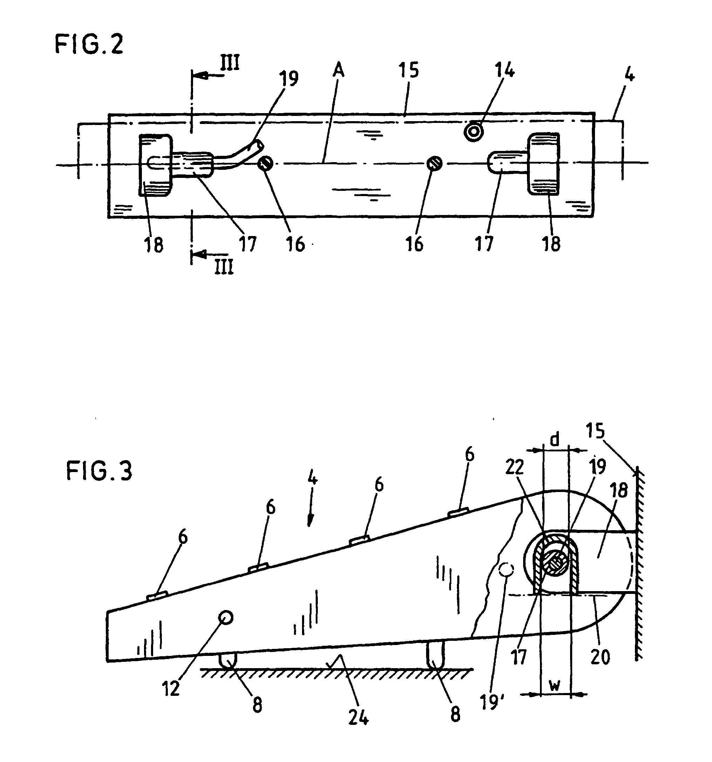

Dazu kommt noch der weitere Vorteil des erschwerten Wärmeüberganges von sich erwärmenden Teilen des Bedienungspultes 4 auf das Waagengehäuse 21, da deren Wärme ja nur über die körperliche, die geometrische Achse A definierende Gelenkseinrichtung zum Waagengehäuse 21 gelangen kann, wie bei Beschreibung der Fig. 3 noch besonders deutlich wird.

Das Bedienungspult 4 weist im dargestellten Ausführungsbeispiel vier Drucktasten 6 sowie einen durch Berührung einzelner Bereiche zu Eingabezwecken der Betätigung und der Anzeige dienenden Bildschirm 7 auf. Die dargestellte Ausführungsform des Bedienungspultes 4 ist verhältnismässig einfach, doch kann ein solches Bedienungspult beträchtliche Ausmasse in seiner Längsausdehnung von der Frontplatte 9 weg annehmen. Um zu vermeiden, dass bei einer Druckbetätigung eines der Teile 6 oder 7 ein Kippmoment auf das Waagengehäuse 21 ausgeübt wird, sind zweckmässig Füsse 8 vorgesehen. Nun hat es Bedienungspulte mit Füssen schon gegeben; im Zusammenhang mit der vorliegenden Erfindung erfüllen sie aber eine besondere Funktion. Denn während mittels des Nivellierfusses 11 (oder der Nivellierfüsse, falls deren mehrere vorgesehen sind) die Höhe des Waagengehäuses 21 variieren kann, sichern die Füsse 8 (wenigstens ein solcher Fuss 8 ist vorgesehen), eine unabhängig von der Höhe des Waagengehäuses 21 stets gleichbleibende Höhe und nehmen dazu auch noch ein etwaiges Kippmoment bei Druckbetätigung am Bedienungspult 4 auf.

Es wurde oben bereits gesagt, dass das Bedienungspult 4 aus der mit vollen Linien dargestellten Arbeitslage in die strich-punktierte Ruhelage 4' geschwenkt werden kann. Es ist vorteilhaft, wenn wenigstens einer dieser Lagen eine Arretiervorrichtung oder Rastvorrichtung zugeordnet ist, um den Verbleib in der jeweiligen Lage zu sichern. Im gezeigten Ausführungsbeispiel ist an einem der Ständer 3 eine, z. B. von einem nicht dargestellten Anschlag an der Unterseite, etwa horizontal gehaltene Klinke 10 angeordnet, die unter ihrem Eigengewicht auf dem nicht dargestellten Anschlag aufliegt. In der Ruhelage 4' klinkt diese Arretierklinke 10 hinter einem am Bedienungspult 4 vorstehenden Haltestift 12 ein. Diese Anordnung ist in Fig. 1 nur an einer Seite gezeigt, wird aber zweckmässig an beiden Seiten des Bedienungspultes vorgesehen sein.

Ausserdem versteht es sich, dass es sich hier bloss um ein Beispiel handelt und die Arretiereinrichtung jede an sich bekannte Form annehmen kann. Auch kann eine Verrastung oder Arretierung auch für die gezeigte Arbeitslage von vorteil sein.

Es mag sein, dass man sichern will, dass die im Bedienungspult 4 enthaltene Elektronik, wie etwa eine gedruckte Schaltung an der in der Fig. 1 mit dem Bezugszeichen 23 angedeuteten Stelle, in der Stellung 4' mit Sicherheit nicht mehr unter Strom steht. Um dies zu erreichen, kann an der Frontplatte 9 ein in Fig. 1 nur gestrichelt dargestellter, aus Fig. 2 genauer ersichtlicher Schalter 14 vorgesehen sein, der von der hochgeklappten wand des Bedienungspultes 4 beim Verschwenken in die Ruhelage 4' automatisch betätigt wird. Diese Betätigung wird im allgemeinen im Sinne eines Ausschaltens der Elektronik erfolgen, doch kann es sich in einigen Anwendungsfällen auch um ein Umschalten handeln, indem mindestens ein Teil der Elektronik beispielsweise auf einen "stand-by"-Betrieb umgeschaltet wird. Auch kann die Waage 1 selbst bei in Ruhelage 4' befindlichem Bedienungspult weiterhin betreibbar gehalten werden, indem der Schalter 14 zwar die nur vom Bedienungspult anwählbaren Funktionen ausschaltet, gleichzeitig aber einen Grundkreis für einfache Funktionen der Waage 1 entweder einschaltet oder auf sie umschaltet.

All diese Elektronik kann, wenigstens zum Teil durch Abnehmen einer an der Frontplatte 9 des Gehäuses 21 montierten Deckplatte 15 zugänglich gemacht werden. Diese Deckplatte 15 ist in Fig. 1 vom Bedienungspult 4 grösstenteils verdeckt, ist aber aus Fig. 2 deutlich ersichtlich.

Die Deckplatte 15 ist an der Frontplatte 9 beispielsweise mittels Schrauben 16 so befestigt, dass sie mit der Frontplatte 9 eine, wenn auch lösbare, Einheit bildet. An sich wäre auch eine Schnapp- oder Steckverbindung möglich, doch soll mittels der Schrauben eine feste, nicht zufällig lösbare Verbindung mit dem Waagengehäuse 21 geschaffen werden.

In Fig. 2 ist die Deckplatte in einer Frontansicht nach dem Pfeil I der Fig. 1 dargestellt, wobei die obere Kontur des davor liegenden Bedienungspultes 4 lediglich strich-punktiert angedeutet ist. Für die Schwenkbewegung dieses Bedienungspultes 4 sind zwei einander gegenüberliegende Achsstummel 17 an Lagerwangen 18 vorgesehen. Da das Bedienungspult 4 normalerweise die schon erwähnte Elektronik beinhalten wird, ist die Leitungsführung ein Problem. Das entsprechende Kabel soll möglich nicht mit der, oft verschmutzten Unterlage (24 in Fig. 3), auf der die Waage 1 steht, in Berührung kommen. Es sollen aber auch nicht zu grosse Biegemomente auf das Kabel einwirken, wenn das Bedienungspult in die Ruhelage oder aus dieser in die Arbeitslage verschwenkt wird. Diese Probleme lassen sich am besten lösen, wenn das Kabel 19 mit den Zu- und/oder Ableitungen im Bereiche der geometrischen Schwenkgelenksachse A aus dem Waagengehäuse 21 bzw. dessen Frontplatte 9 austritt. Dies kann vorteilhaft in der dargestellten weise geschehen, indem das Kabel 19 koaxial durch einen der Achsstummel 17 geführt ist. Dadurch wird es bei der Schwenkbewegung nur leicht tordiert, nicht aber gebogen. Wie in Fig. 2 angedeutet ist, kann dann das Kabel 19 unmittelbar nach oben in das Innere des Bedienungspultes 4 geführt werden, so dass es mit Verschmutzungen auf der Unterlage 24 (Fig. 3) nie in Berührung kommen kann.

Fig. 3 zeigt eine Seitenansicht des Bedienungspultes, teilweise im Schnitt nach der Linie III-III der Fig. 2. Das Bedienungspult 4 steht hier auf der schon erwähnten horizontalen Unterlage 24 auf seinen Füssen 8. Eine durch die Wahl der Schnittebene nach der Linie III-III der Fig. 2 vor der Zeichenebene liegende, etwas rechts des rechten Endes des linken Achsstummels 17 in Fig. 2 verlaufende und daher strich-punktiert angedeutete Wand 20 trägt ein etwa U-förmiges Lagerauge 22, das in den Achsstummel 17 eingehängt ist. Dies bedeutet, dass ein etwaiger Wärmeübergang vom Bedienungspult 4 auf den jeweiligen Achsstummel 17 nur über die Berührungslinie dieses Achsstummels 17 mit dem Lagerauge 22 erfolgen könnte. Wie ersichtlich, ist zweckmässig die Weite w des Lagerauges 22 in horizontaler Richtung etwas grösser als der Durchmesser d des Achsstummels 17, so dass Lagerauge 22 und Achsstummel 17 höchstens entlang einer einzigen Linie einander berühren können. Es kann aber das spiel in horizontaler Richtung auch grösser gewählt werden, beispielsweise um damit eine Schrägstellung des Bedienungspultes 4 gegenüber dem Waagengehäuse aus irgendwelchen Gründen zu ermöglichen.

Ferner ist es vorteilhaft, dass zur Erschwerung eines Wärmeübergangs das Lagerauge 22, der Achsstummel 17, die Lagerwange 18 und/oder die Platte 15 aus wärmeisolierendem Material, insbesondere aus Kunststoff, hergestellt sind. Es versteht sich, dass die Anordnung an der rechten Seite (bezogen auf Fig. 2) analog ist, wobei dort lediglich das Kabel 19 fehlt, gegebenenfalls aber auch ein weiteres Kabel vorgesehen sein könnte. Es versteht sich ebenfalls, dass die dargestellte Anordnung auch insofern umgekehrt werden könnte, als die Achse oder die Achsstummel 17 Teil des Bedienungspultes, das Lagerauge 22 ein an der Platte 15 befestigter Teil sein könnte.

Das durch den Zwischenraum der Innenseite des Lagerauges 22 zur Achse 17 gegebene relativ grosse Spiel in wenigstens annähernd vertikaler Richtung entkoppelt Höhenunterschiede des Waagengehäuses 21 bei der Nivellierung mittels des Fusses 11 gegenüber dem durch die Füsse 8 bestimmten Niveau des Bedienungspultes 4. Die Tatsache, dass das Lagerauge 22 nach unten hin offen ist, erleichtert das Abnehmen und gegebenenfalls Auswechseln des Bedienungspultes 4, wozu auch die Abnehmbarkeit der Deckplatte 15 durch Lösen der Schrauben 16 beiträgt. Es ist aber klar, dass diese Abnehmbarkeit auch anders gesichert werden könnte, beispielsweise indem ein Achsstummel 17 fest ist, der andere jedoch axial entgegen dem Druck einer Feder verschiebbar, um den letzteren in axialer Richtung im Lagerauge 22 einschnappen zu lassen. Auch könnte, gerade mit einer U-förmigen Ausbildung des Lagerauges 22, eine körperliche, sich entlang der geometrischen Achse A erstreckende Achse 17 durchgehend sein. In diesem Falle könnte das Kabel 19 radial aus der Achse 17 austreten, gegebenenfalls die Achse 17 (oder wenigstens ein Achsstummel 17) in der zugehörigen Lagerwange 18 drehbar befestigt sein.

Fig. 3 veranschaulicht auch, wieso das aus dem Achsstummel 17 austretende Kabel 19 von der Unterlage 24, auf der die beiden Füsse 8 stehen, entfernt gehalten werden kann: Sein freies Ende 19' ist nämlich nahe seiner Austrittsstelle in der Wand 20 befestigt bzw. tritt dort zur Versorgung der Elektronik des Bedienungspultes 4 in dieses ein.

Zweckmässig (nicht in der Zeichnung dargestellt) kann im Bodenbereich des Bedienungspultes 4 ein Hohlraum für eine Kabelaufwicklung vorgesehen sein, wobei der Hohlraum von einer Bodenplatte nach unten bedeckt wird. Gleichzeitig kann die Konstruktion so ausgeführt sein, dass die Bodenplatte als Gegenhalterung für die Schwenkgelenkseinrichtung dient.

Selbstverständlich ist das Bedienungspult von der Waage lösbar. Die Signale können sowohl mittels einer Leitung als auch drahtlos, beispielsweise optoelektronisch, übermittelt werden. Für Anwendungen, die auch bei Verwendung eines Kabels ein rasches und vollständiges Separieren des Bedienpults vom Rest der Waage erfordern, wird der Fachmann eine Steckerverbindung vorsehen.

Die mit der Erfindung verbundenen Vorteile bestehen insbesondere darin, dass durch die erfindungsgemässe Trennung/Beabstandung des Bedienungspultes von der eigentlichen Waage wärmetechnische, die Wägeergebisse beinflussende Effekte reduziert bzw. beseitigt werden und somit genauere Ergebnisse erzielt werden.

## Patentansprüche

1. Waage (1) mit einem Waagengehäuse (21) und einem Bedienungspult (4) als gegeneinander beweglichen Teilen (4, 21), welches Bedienungspult (4) am Waagengehäuse (21) mit diesem durch am Bedienungspult (4) und am Waagengehäuse (21) vorhandene, ineinandergreifende Armaturen (17, 18, 22) verbunden ist und um eine Schwenkachse (A) von einer vom Waagengehäuse (21) vorragenden Arbeitslage in eine Ruhelage (4') verschwenkt werden kann, **dadurch gekennzeichnet, dass** die Schwenkachse (A) im wesentlichen horizontal vor dem Waagengehäuse (21) verläuft, die Armaturen scharnierartig ineinander greifen, in mindestens einer zur Schwenkachse (A) radialen Richtung Spiel aufweisen und so eine Schwenkgelenkeinrichtung (17, 22) bilden, welche ein Kippen der Schwenkachse (A) ermöglicht.

2. Waage nach Anspruch 1, **dadurch gekennzeichnet, dass** die Schwenkgelenkseinrichtung (17, 22) mindestens eine, insbesondere stummelförmige Achse (17) an einem der gegeneinander beweglichen Teile (4, 21) mit einem gegenüber der Achse (17) ein Spiel zulassenden Lagerauge (22) am anderen der gegeneinander beweglichen Teile (21, 4) aufweist.

3. Waage nach Anspruch 2, **dadurch gekennzeichnet, dass** das Spiel mindestens in vertikaler Richtung gegeben ist.

4. Waage nach Anspruch 2, **dadurch gekennzeichnet, dass** die Achse (17) am Waagengehäuse (21), das Lagerauge (22) am Bedienungspult (4) vorgesehen ist.

5. Waage nach Anspruch 2, **dadurch gekennzeichnet, dass** das Lagerauge (22) etwa U-förmig ausgebildet ist und so eine Trennung von der Achse (17) über die offene Seite der U-Form ermöglicht.

6. Waage nach Anspruch 2, **dadurch gekennzeichnet, dass** wenigstens ein Teil der ineinandergreifenden Armaturen (17, 18, 22) oder des angrenzenden Waagengehäuses (21) aus wärmeisolierendem Material gebildet ist.

7. Waage nach Anspruch 1, **dadurch gekennzeichnet, dass** die Schwenkgelenkseinrichtung (17, 22) ausser einer Schwenkbewegung des Bedienungspultes (4) auch eine Höhenverschiebung desselben zulässt, so dass das Waagengehäuse (21) mittels einer Nivelliereinrichtung (11) unabhängig vom Bedienungspult (4) nivellierbar ist, und dass das Bedienungspult (4) mindestens einen sich in der Arbeitslage an einer Unterlage (24) abstützenden Fuss (8) aufweist.

8. Waage nach Anspruch 1, **dadurch gekennzeichnet, dass** ein Schalter (14) vorhanden ist, welcher beim Verschwenken des Bedienungspults in die Ruhelage (4') den Betriebszustand von in der Waage enthalten Schaltkreisen beeinflusst.

9. Waage nach Anspruch 1, **dadurch gekennzeichnet, dass** für wenigstens eine der beiden Lagen des Bedienungspultes (4), insbesondere für die Ruhelage (4'), eine Arretiereinrichtung (10, 12) vorgesehen ist.

10. Waage nach Anspruch 1, **dadurch gekennzeichnet, dass** die Schwenkgelenkeinrichtung (17, 22) als lösbare mechanische Verbindung ausgestaltet ist und das Bedienungspult (4) in einer weiteren Anordnung abgesetzt vom Waagengehäuse (21) mit der restlichen Waage zusammenwirkt.

11. Waage nach Anspruch 1, **dadurch gekennzeichnet, dass** ein Kabel (19) das Waagengehäuse (21) mit dem Bedienungspult (4) verbindet, das im Bereich der Schwenkgelenkseinrichtung (17, 22) aus dem Waagengehäuse (21) austritt.

12. Waage nach Anspruch 11, **dadurch gekennzeichnet, dass** das Kabel (19) wenigstens annähernd koaxial zur, vorzugsweise am Waagengehäuse (21) vorgesehenen, Achse (17) und durch diese hindurch geführt ist.

13. Waage nach Anspruch 11, **dadurch gekennzeichnet, dass** das Kabel (19) aus einem vom Waagengehäuse (21) abnehmbaren und mit diesem über eine lösbare Befestigungseinrichtung (16) verbundenen, insbesondere plattenförmigen, Abschluss (15) austritt.

14. Waage nach Anspruch 11, **dadurch gekennzeichnet, dass** das Kabel (19) im Bereich der Schwenkgelenkseinrichtung (17,22) eine Steckerverbindung aufweist.

15. Waage nach Anspruch 10 und 11, **dadurch gekennzeichnet, dass** die Unterseite des Bedienungspults (4) einen Kabelstauraum aufweist.

16. Waage nach Anspruch 10, **dadurch gekennzeichnet, dass** das Bedienungspult (4) und das Waagengehäuse (21) aufeinander abgestimmte, insbesondere optoelektronische Sende-/Empfangseinheiten für eine drahtlose Signalverbindung zwischen den beiden Waagenteilen enthalten.

## Claims

1. A balance (1) comprising a balance housing (21) and an operator panel (4) constituted as two parts (4, 21) that are movable in relation to each other; wherein the operator panel (4) is connected to the balance housing (21) through mutually engaged armatures (17, 18, 21) that are provided on the operator panel (4) and the balance housing (21); and wherein the operator panel is rotatable about a pivot axis (A) from a working position, in which the operator panel projects forward from the balance housing (21), into a rest position (4');
**characterized in that** said pivot axis (A) runs essentially in a horizontal direction in front of the balance housing (21), the armatures cooperate with each other as a hinge and have a degree of play in at least one radial direction in relation to the pivot axis (A), so that the armatures form a pivoting arrangement (17, 22) that allows the pivot axis (A) to assume a tilted position.

2. The balance according to claim 1, **characterized in that** the pivoting arrangement (17, 22) comprises at least one, in particular peg-shaped, axle (17) arranged on one of the two parts (4, 21) that are movable in relation to each other, and a rimmed opening (22) allowing a degree of play in relation to the axle (17) arranged on the other of the two parts (21, 4) that are movable in relation to each other.

3. The balance according to claim 2, **characterized in that** the play is provided at least in a vertical direction.

4. The balance according to claim 2, **characterized in that** the peg-shaped axle (17) is part of the balance housing (21), and the rimmed opening (22) is part of the operator panel (4).

5. The balance according to claim 2, **characterized in that** the rimmed opening (22) is approximately U-shaped, so that the peg-shaped axle (17) is separable from the rimmed opening (22) through the open side of the U.

6. The balance according to claim 2, **characterized in that** at least a part of the mutually engaged armatures (17, 18, 21) or of an adjacent part of the balance housing (21) is made of a heat-insulating material.

7. The balance according to claim 1, **characterized in that** the pivoting arrangement (17, 22) also allows a vertical displacement of the operator panel (4) in addition to the rotation, so that the balance housing (21) can be independently adjusted to a level position by means of a leveling device (11) without being constrained by the operator panel (4), and further **characterized in that** the operator panel (4) comprises at least one foot (8) which, in said operating position, rests on a support surface (24).

8. The balance according to claim 1, **characterized in that** a switch (14) is provided, said switch being operable to influence an operating state of electric circuit components in the balance when the operator panel is rotated into the rest position (4').

9. The balance according to claim 1, **characterized in that** a locking device (10, 12) is provided for at least one of the two positions of the operator panel (4), in particular for the rest position (4').

10. The balance according to claim 1, **characterized in that** the pivoting arrangement (17, 22) is configured as a releasable mechanical connection, and further **characterized in that** the balance can be used in an alternative working arrangement where the operator panel (4) cooperates with the rest of the balance while being separated from the balance housing (21).

11. The balance according to claim 1, **characterized in that** a cable (19) connects the balance housing (21) to the operator panel (4), said cable exiting from the balance housing (21) in the area of the pivoting arrangement (17, 22).

12. The balance according to claim 11, **characterized in that** the cable (19) is routed along a path that runs through, and is at least approximately coaxial to, the axle (17), the latter being preferably arranged on the balance housing (21).

13. The balance according to claim 11, **characterized in that** the cable (19) exits from a closure element (15) which is in particular of a plate-like shape and is removable from the balance housing (21), being connected to the latter by a releasable fastener arrangement (16).

14. The balance according to claim 11, **characterized in that** the cable (19) has a plug connection in the area of the pivoting arrangement (17, 22).

15. The balance according to claims 10 and 11, **characterized in that** the bottom of the operator panel (4) comprises a cable storage space.

16. The balance according to claim 10, **characterized in that** the operator panel (4) and the balance housing (21) comprise sending/receiving units, particularly of an optoelectronic kind, attuned to each other for a wireless signal communication between the two parts of the balance.

## Revendications

1. Balance (1) comprenant un carter de balance (21) et un pupitre de commande (4) comme parties (4, 21) mobiles l'une par l'autre, lequel pupitre de commande (4) est relié sur le carter de balance (21) avec celui-ci par des raccords (17, 18, 22) présents sur le pupitre de commande (4) et sur le carter de balance (21) et s'engageant les uns dans les autres et peut être basculé autour d'un axe de pivotement (A) d'une position de travail dépassant du carter de balance (21) à une position de repos (4'), **caractérisée en ce que** l'axe de pivotement (A) est agencé sensiblement horizontalement devant le carter de balance (21), les raccords s'engagent les uns dans les autres à la façon d'une charnière, présentent du jeu dans au moins une direction radiale par rapport à l'axe de pivotement (A) et forment ainsi un dispositif d'articulation de pivotement (17, 22), lequel permet un basculement de l'axe de pivotement (A).

2. Balance selon la revendication 1, **caractérisée en ce que** le dispositif d'articulation de pivotement (17, 22) présente au moins un axe (17), en particulier en forme de bout, sur l'une des parties (4, 21) mobiles les unes par rapport aux autres avec un oeillet de palier (22) permettant un jeu par rapport à l'axe (17) sur l'autre des parties (21, 4) mobiles les unes par rapport aux autres.

3. Balance selon la revendication 2, **caractérisée en ce que** le jeu est présent au moins dans le sens vertical.

4. Balance selon la revendication 2, **caractérisée en ce que** l'axe (17) est prévu sur le carter de balance (21), l'oeillet de palier (22) sur le pupitre de commande (4).

5. Balance selon la revendication 2, **caractérisée en ce que** l'oeillet de palier (22) est réalisé à peu près en forme de U et permet ainsi une séparation de l'axe (17) par le côté ouvert de la forme du U.

6. Balance selon la revendication 2, **caractérisée en ce qu'**au moins une partie des raccords (17, 18, 22) s'engageant les uns dans les autres ou du carter de balance (21) contigu est formée dans du matériau thermiquement isolant.

7. Balance selon la revendication 1, **caractérisée en ce que** le dispositif d'articulation de basculement (17, 22) autorise, en dehors d'un mouvement de basculement du pupitre de commande (4), également un déplacement en hauteur du pupitre, de sorte que le carter de balance (21) peut être mis à niveau au moyen d'un système de nivellement (11) indépendamment du pupitre de commande (4) et **en ce que** le pupitre de commande (4) présente au moins un pied (8) soutenant dans la position de travail sur un support (24).

8. Balance selon la revendication 1, **caractérisée en ce qu'**il y a un interrupteur (14) qui influence, lors du basculement du pupitre de commande dans la position de repos (4'), l'état de fonctionnement de circuits contenus dans la balance.

9. Balance selon la revendication 1, **caractérisée en ce qu'**un dispositif d'arrêt (10, 12) est prévu pour au moins l'une des deux positions du pupitre de commande (4), en particulier pour la position de repos (4').

10. Balance selon la revendication 1, **caractérisée en ce que** le dispositif d'articulation de pivotement (17, 22) est conçu comme une liaison mécanique amovible et le pupitre de commande (4) agit conjointement avec le reste de la balance dans un autre agencement décalé du carter de balance (21).

11. Balance selon 1a revendication 1, **caractérisée en ce qu'**un câble (19) relie le carter de balance (21) au pupitre de commande (4), lequel sort dans la zone du dispositif d'articulation de pivotement (17, 22) du carter de balance.

12. Balance selon la revendication 11, **caractérisée en ce que** le câble (19) est guidé au moins approximativement de façon coaxiale par rapport à l'axe (17), prévu de préférence sur le carter de balance (21), et à travers cet axe.

13. Balance selon la revendication 11, **caractérisée en ce que** le câble (19) sort d'une terminaison (15) pouvant être enlevée du carter de balance (21) et reliée à ce carter au moyen d'un dispositif de fixation (16) amovible, en particulier en forme de plaque.

14. Balance selon la revendication 11, **caractérisée en ce que** le câble (19) présente une fiche de raccordement dans la zone du dispositif d'articulation de pivotement (17, 22).

15. Balance selon les revendications 10 et 11, **caractérisée en ce que** le côté inférieur du pupitre de commande (4) présente un espace de rangement de câble.

16. Balance selon la revendication 10, **caractérisée en ce que** le pupitre de commande (4) et le carter de balance (21) contiennent des unités d'émission/réception adaptées les unes aux autres, en particulier optoélectroniques pour une liaison de signal sans fil entre les deux parties de balance.
